# EUROPEAN PATENT APPLICATION

(11) **EP 1 584 695 A1**
(43) Date of publication of application: **12.10.2005**
(21) Application number: 04101418.4
(22) Date of filing: 06.04.2004
(51) Int. Cl.: C22C 1/08, B22F 7/00

(54) **Method for joining a metal foam to a metal body**

(71) Applicant: EFOAM S.A., 2930 Luxembourg (LU)
(72) Inventor: KUHN, Marc, 4397, Pontpierre (LU)
(74) Representative: Ocvirk, Philippe

(57) **Abstract**

In the present method for joining a metal foam to a metal body an open cell metal foam is joined to a surface of a metal body at at least one main joining location. The metal foam portion contacting the metal body surface at the at least one main joining location is substantially compressed.

## Description

### TECHNICAL FIELD

The present invention generally relates to an assembly of a metal foam to a metal body and to a method for joining a metal foam to a metal body.

### BACKGROUND ART

In the past decade, metallic foams have attracted increasing interest in many industrial fields. Indeed, various production routes of metal foams have been explored and metal foams are now currently used in structural, electric, electronic, heat management or chemical applications.

Open cell metal foams are particularly recommended for very compact cooling structures for e.g. heat-exchangers, electronic (printed) circuits or discrete semiconductor chips. Basically, the heat exchange capacity of a heat source, i.e. a flat or curved metal surface, is increased in contact with the open-pore metal foam because the latter improves the flow characteristics of the cooling medium and increases the overall surface involved in heat exchange. For these applications, it is required to join the metal foam to the surface of the heat-source, i.e. a pipe or a thermal base plate. This is conventionally done by welding, brazing or even sintering.

A problem however frequently encountered when joining a metal foam― having a network of metal ligaments forming numerous open cells to provide porosity―to a metal body is that it is difficult to have all foam ligaments (also called cell struts) at the foam/body interface in intimate contact with the body. This difficulty of properly controlling the joining at the metal/foam interface results in a reduced overall heat exchange between body and foam. When joining the foam to the body with joining material such as solder, one has the possibility to use a large quantity of solder. Unfortunately, using large amounts of solder causes the clogging of the pores of the metal foam from the interface towards the centre of the foam, thereby reducing the exposed foam surface available for heat exchange. Further to this, the solder may cause corrosion problems and/or reduce thermal conductivity by diffusing into and alloying with the highly conductive foam material.

### OBJECT OF THE INVENTION

The object of the present invention is to provide a method for joining a metal foam to a metal body, which provides an efficient heat exchange at the foam/body interface. This object is achieved by a method as claimed in claim 1.

### GENERAL DESCRIPTION OF THE INVENTION

In a method for joining an open cell metal foam to a metal body, the metal foam is joined to a surface of the metal body at at least one main joining location. According to the present invention, the metal foam portion contacting the metal body surface at the main joining location is substantially compressed.

The locally compressed portion of the metal foam at the main joining location provides a locally densified foam region, which permits an improved heat transfer at the metal foam to body interface. In other words, the metal foam is compressed at the main joining location (along the welding seam) to form a massive metallic contact at the surface of the metal body, which thus forms a heat transfer path between the body and the foam via this locally compressed foam portion.

The present method is particularly suited for the manufacture of heat-exchange assemblies, where an efficient thermal transfer between the foam and the supporting metal body is required. The use of open cell metal foam in heat exchangers is particularly appreciated since it has an increased surface compared to a metal plate for heat exchange by convection.

Preferably, the compression ratio of the metal foam at the main joining locations is of at least 80%. This means that the average density (expressed in "grams of metal foam per cubic meter of the material") of the compressed foam portion at the main joining locations is at least 5 times the initial average density of the foam. If the foam is compressed in its thickness direction, such a compression ratio implies that the thickness of the compressed foam portion will be at most 20% of the initial foam thickness. This will typically cause all the foam ligaments of the compressed portion to be flattened against the body surface.

It is to be noted that the portion of foam that is compressed to form the compressed foam portion and is in contact with the body surface is advantageously determined as a compromise between heat transfer and mechanical anchoring strength, depending on the particular designs.

The compression of the metal foam can be carried out before it is joined to the metal body. In this case, the metal foam is compressed at predetermined locations, and the metal foam is then joined to the body at these predetermined locations. However, the metal foam is preferably compressed when already in contact with the metal body, e.g. concurrently with the joining operation, to provide compressed metal foam portions at the main joining locations.

In a preferred embodiment, the metal foam is joined to the metal body by ultrasonic welding. Ultrasonic welding is advantageous in that it does not introduce foreign joining metals, and thus does not significantly alter the properties of the constituent metals or alloys of both the metal foam and body. More particularly, in heat exchange applications where e.g. copper is a material of choice, ultrasonic welding permits not to affect the outstanding conductivity of pure, electrolytic copper throughout the structure.

Although ultrasonic welding is preferred to join the metal foam to the metal body, other welding techniques can be used, complementarily or alternatively, such as soldering, welding, brazing or adhesive based techniques.

Advantageously, for best performance in critical applications, the metal foam portions spanning between two consecutive main joining locations where the metal foam is substantially compressed are also joined to the body surface. This is preferably done by compressing the foam in direction of the body surface in a lesser extent than at the main joining locations, to bring all the foam ligaments at the foam/body interface in contact with the body surface while maintaining a fully open porous structure. The joining of these foam portions is preferably carried out by ultrasonic welding, however other techniques can be used such as soldering, welding, brazing or adhesive based techniques. In this preferred embodiment, the compression of the foam portions in between the substantially compressed portions is preferably carried out by calendering. Preferably, the pressure exerted for calendering the foam is applied while the ultrasonic energy is applied, so as to maximize the portion of cell struts actually bonded to the metal body. The ratio of the calendered foam thickness to the original foam thickness is typically equal to or above 0.5. The open cell diameter will be reduced in proportion, but the open cell structure of the foam will be preserved. In this embodiment, the initial foam is preferably selected taking into account the calendering step, so as to obtain the desired cell volume in the foam after calendering. This means that foams with porosity values of less than 30 ppi can be used. It is also to be noted that the calendaring step can be used to impress a predetermined surface structure or texture in the metal foam, either having a structural function, or allowing for instruction /identification, or simply for ornamental purposes.

As already mentioned, the compression of the metal foam at the main joining locations is preferably performed during welding. This may be carried out by applying on the ultrasonic welding tool a pressure towards said metal body surface when positioned at the main joining location, so as to compress a metal foam portion at the main joining location.

Preferably, the metal foam shall present some ductility, as it allows the design of a variety of cooling structure geometries at the surface of the metal body. Accordingly, the present method shall advantageously comprise the step of forming or reshaping the metal foam to give the latter a certain profile or configuration. This forming can be performed prior to the joining of the foam, or while the foam is in contact with the body.

In case of ultrasonic welding where the metal foam is preferentially compressed by the welding tool, the latter shall also advantageously be designed as a forming tool, to give a predetermined profile to the metal foam in the vicinity of the main joining location.

In particular, the substantially uncompressed foam portions spanning two consecutive main joining locations can be given a particular profile.

Depending on the intended application and on the nature of the metal foam and/or metal body surface, the latter may have been subjected to a surface treatment, e.g. for corrosion protection, or for adjusting the coefficient of emission/absorption of radiation, prior to the joining. Alternatively, the surface treatment can be applied to the foam and/or metal body after the joining. A heavy metallic plating can also for example be applied to reinforce the existing foam structure and thereby increase the amount of metal carrying the heat, notably also strengthening the bonds between the cell struts (foam ligaments) and the body. Copper and silver are preferred for carrying out such metal plating, silver being particularly suitable for radiation absorption as its colour can easily be darkened and it has a high thermal conductivity. The plating weight can be of the same order, in terms of gram metal per apparent square meter of foam, as the original foam, typically above 600 gram metal per apparent square meter of foam. This plating step can be carried out by known electrolytic or chemical plating processes after assembly.

The present method can be implemented for the production of compact cooling structures having high heat conductivity, in which case the metal foam can be a strip of open cell copper (or copper alloy) foam and the metal body is a copper (or copper alloy) foil.

The present method also more generally permits the joining of an open-cell metal foam to a metal part or component having a heat evacuating or collecting surface. In such a case the metal body may be a pipe, a plate or any other element having a thermal surface to which the metal foam is to be joined. It is to be noted that the present method allows to join the foam to a curved inner or outer surface, such as a pipe wall. Furthermore, depending on the application, one may join a foam to two opposite surfaces of a metal body. This may be the case where the metal body is a separating wall between two media, and it is desired to improve the heat exchange between these two media.

According to another aspect of the invention, an assembly of a metal foam to a metal foil is proposed, wherein a metal foam is joined to the surface of the metal body at at least one main joining location. The metal foam portion contacting the metal body at the at least one main joining location is substantially compressed.

In the locally compressed foam portion, the metal density is high and permits an efficient heat-exchange between the foam and body. The number and dimensions of the main joining locations may be determined based on the desired strength of the metal/foam bond and on the desired heat transfer capability between the foam and body. This manner of joining the metal foam to the metal body provides a particularly good heat-exchange relationship at the main joining locations via the substantially compressed foam portions.

However, for further improved performance, the foam portions spanning two consecutive main joining locations may be partially compressed, preferably using calendering, so as to maximize the number of ligaments (cell struts) in contact with the body. In such a case, the ligaments at the interface are also preferably joined to the body surface. If ultrasonic welding is not possible, this joining can be provided by other means such as by using thermally conductive adhesives.

Preferred material for the foam and the body is copper. More particularly, the metal foam is an open cell copper foam and the metal body is a copper foil produced by either rolling or electrolytic deposition. The copper foam may have an initial porosity in the range of 10 to 100 ppi. Copper foil thickness may typically be between 200 and 500 µm.

An assembly according to the invention featuring a copper foam bonded to a copper foil forms a heat exchanger of compact design and having a high heat transfer capability.

The foam is preferably in strip form and is joined to the surface of the metal body at a plurality of main joining locations according to a predetermined joining pattern. As already mentioned, the joining pattern may be determined on the basis of the desired bonding strength and heat transfer capability. The welding seams at the main joining locations may take the form of spots, intersecting or non-intersecting lines, curves or circles.

Depending on the applications, the strip of foam may simply be laid flat on the surface of the metal body to follow its surface profile, or can be given a certain shape. In the latter case, the strip of metal foam may have a certain configuration or profile so that it only contacts the body surface at the main joining locations. The metal foam may thus e.g. be bent away from the body surface to form porous protrusion on the body surface, such as e.g. a series of fins of metal foam.

Alternatively, the metal foam may be in strip form and joined to the body by a compressed edge portion, so as to be perpendicular to the metal body surface. This is another way of forming porous fins on the body surface.

For economical reasons and depending on the application, the metal foam may have a gradient of volume density. In other words, the amount of metal per unit volume throughout the foam may vary. In general, this gradient of volume density shall be in the thickness direction of the foam, and the foam may thus be joined to the metal body so that the volume density of the metal foam increases towards the metal body. It will generally be advantageous if the gradient of volume density is higher towards the body, where the heat has to flow through before being dispersed within the large surface area formed by the upper foam layers. Overall foam thickness will preferably be below 2.5 millimetre, so as to allow for easy flow of the cooling medium (gas or liquid) throughout the foam.

The assembly of the invention can advantageously be used in various types of heat exchange applications, mainly in cases where either compactness, flexibility or lightness (through reduced size) is required. When using assemblies featuring highly conductive copper foams, the porosity may be above 95%.

More specifically, a metal/foam assembly of the invention can be used as heat-exchanger in air conditioning appliances (typically in automotive vehicles) or in refrigerating devices. In such a case, the metal body may be a tube or any ducting portion of the system.

Another particularly advantageous field of application for the present metal/foam assembly is electronics, as it is particularly well suited for cooling integrated circuits and other heat-generating electronic components or heat-evacuating surfaces to be found on a circuit board. It will be understood that coolers made from a copper foam/foil assembly according to the invention can be easily cut to size and attached to the often fragile casing of such integrated circuits or to circuit boards by using e.g. known thermo-conductive adhesives.

Furthermore, the intrinsic ability of copper foam to shield from electromagnetic radiation allows the use of the present assembly as electromagnetic shield.

Alternatively, the present assembly can be used in sound absorbing application.

Finally, the ability of foam, optionally black-coated, to absorb radiation and to transfer heat allows the use of the present assembly in heat collecting applications, e.g. as a part of a solar heat collector.

### BRIEF DESCRIPTION OF THE DRAWINGS

The present invention will now be described, by way of example, with reference to the accompanying drawings, in which:
FIG.1: is a sketch illustrating a preferred method of joining a metal foam to a metal foil, using an ultrasonic welding and forming tool;
FIG.2: is a sketch illustrating a metal foam joined to a metal foil by a plurality of spot welds;
FIG.3: is a sketch showing a metal foam joined to a metal foil, wherein the metal foam is formed into halve-cylinders;
FIG.4: is a sketch showing a metal foam joined to a metal foil, wherein the foam forms a fin structure; and
FIG.5: is a sketch illustrating a variety of ways of joining a metal foam to a metal foil in accordance with the invention.
FIG.6: illustrates calendaring

### DETAILED DESCRIPTION OF PREFERRED EMBODIMENTS

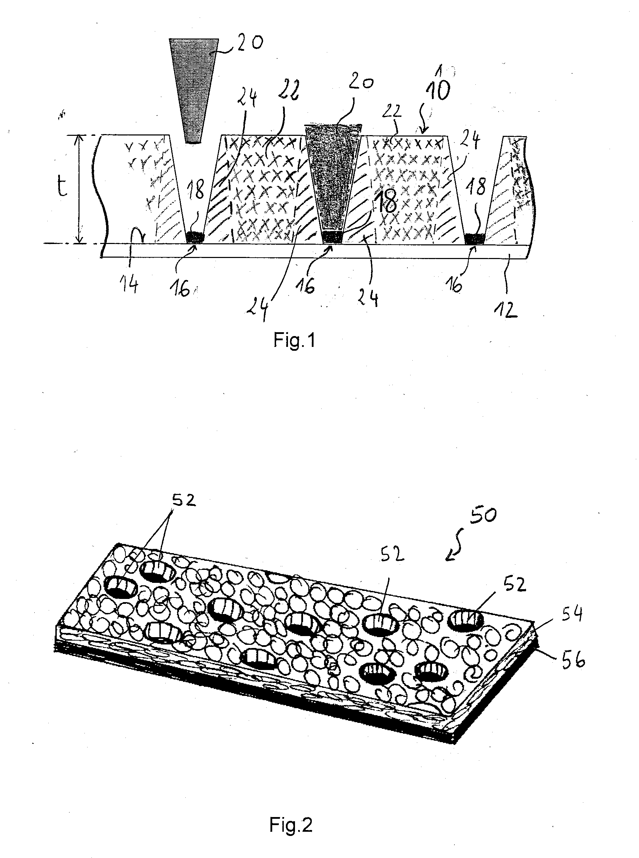

Fig.1 schematically illustrates a preferred method for joining of a metal foam 10 to a metal body 12, wherein the joining is carried out by ultrasonic welding. The present method is particularly advantageous for the manufacture of heat-exchange structures, as the joining method provides an improved heat transfer between the body 12 and the foam 10. In Fig.1, the metal body 12 is preferably a metal foil, and, although not apparent from the Figure, the metal foam 10 is in strip form. For heat exchange applications, the metal foil 12 preferably is a foil of copper or copper alloy and the metal foam 10 preferably is an open cell foam consisting of copper or copper alloy.

The term "open-cell metal foam" herein means a porous metallic structures having a mainly open cell structure (i.e. with a majority of open cells).

According to the present method, the copper foam 10 is joined to the copper foil surface 14 at a plurality of main joining locations 16 and the copper foam portions 18 contacting the foil surface 14 at the main joining locations 16 are substantially compressed so as to locally increase the foam density and form localised mass accumulations. These highly compressed portions 18 of foam at the main joining locations 16 provide highly conductive heat transfer paths between the foam 10 and the metal foil 12. In the obtained assembly, there is no need to physically join (or bond) the copper foam 10 to the copper foil 12 between the main joining locations 16 where the foam is highly compressed.

In the present embodiment, the joining is advantageously carried out by ultrasonic welding by means of an ultrasonic welding tool 20. In fact, the strip of copper foam 10 is laid flat on the surface 14 of the copper foil 12 and the welding tool 20 is positioned at each desired, predetermined welding location above the foam 10. It is to be noted that in the present method, the metal foam 10 is compressed, joined and shaped by means of the welding tool 20. As a matter of fact, after positioning of the tool 20 above the desired welding location, the tool is lowered towards the foil to compress the foam to the desired ratio. This can be seen in Fig.1 -right hand side, where the welding tool 20 is in its lowest position. As the welding tool 20 is lowered to compress the foam 10, it is also under ultrasonic agitation in a direction parallel to the foil surface 14, so that it applies shearing forces between the copper foam 10 and the foil 12. The resulting friction welds together the foam 10 and the 12 foil in the area of the vibrating tool, so that the compressed foam portion 18 is joined to the foil 12 along a welding seam essentially corresponding in shape to the lower surface of the welding tool 20.

In Fig.1, although not shown, the welding tool 20 preferably has a flat rectangular lower surface, so that it forms linear seams extending perpendicularly to the plane of Fig.1. Depending on the shape of the ultrasonic welding tool, the welding seams may also take the form of spots, intersecting or non-intersecting lines, curves or circles. These welds can be carried out by any suitable conventional ultrasonic welding technique.

It is further to be noted that the trapezoidal shape of the welding tool 20 also results in a compression of the foam 10 throughout its thickness (indicated t in Fig.1) in the vicinity of the main joining location. In Fig.1, compressing the foam 10 at the main joining location 16 also causes compression in the foam 10 on the sides of the welding tool 20. As a result, in the obtained assembly, the foam consists of different structurally different zones, namely:
- weld zone: the portion 18 of the foam that is welded to the foil surface 14 and which has been substantially compressed. This foam portion 18 provides a heat-transfer path between foam 10 and foil 12 via conduction inside the metal.
- uncompressed zone: copper foam portion indicated 22 in Fig.1, that is not compressed and where the foam 10 has its original density. Heat exchange occurs by convection with the ambient medium, e.g. air or a liquid coolant.
- densified zone: foam regions compressed by the welding tool in the vicinity of the weld, indicated 24 and materialised by crosshatching in Fig.1. The foam 10 is less dense than at the weld zone 18 but more dense than in the uncompressed zones 22. The densified zones 24 mainly provide heat transfer by conduction between the uncompressed zones 22 and the weld zones and convective heat exchange with the cooling medium..

For a compact design adapted for heat exchange application, the metal foam shall preferably be a copper foam having an original thickness in the range of 1.5 to 2.5 mm, a porosity of about 30-60 ppi (the number of unit cells counted along a line of one inch in length), and a specific weight area above 600 g /m² (i.e. a strip of copper foam having external dimension of 1 m² weighs 600 g, for a given thickness of e.g. 2.0 mm). The metal foil preferably is an electrodeposited copper foil with a thickness between 200 and 500 µm.

In some applications, it may be desirable to have a gradient of volume density in the foam, in particular for economical reasons. Accordingly, the gradient can be such that the metal density diminishes throughout the foam thickness, so that there is a heavier side and an opposite, comparatively lighter side. Such a gradient can be easily achieved when the metal foam is electrolytically produced, as e.g. described in WO 02/22914, by varying the current density on one of the plating drums, or as a result of multiple deposits on one side of the strip of foam.

An example of a foam having a gradient in volume density is a copper foam having a thickness of 2 mm and a porosity of 45 ppi, and having on one side a specific weight of about 600 g Cu/m² and on the other side a specific weight of about 1000 g Cu/m². Such a strip of copper foam may e.g. be used in applications were mechanical solicitation of the assembly from outside are low, the heavy side facing the foil or body surface.

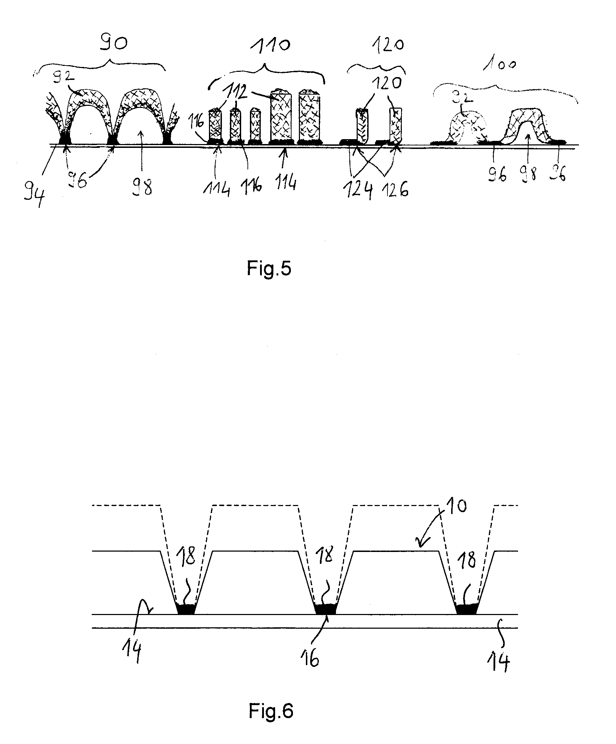

In a particular embodiment of the present method, in order to further increase the heat-exchange capability of the assembly, the method comprises a calendaring step, which consists in compressing the foam portions spanning two consecutive main joining locations 18 in direction of the metal foil 12. This permits to bring all the metal foam ligaments at the interface in contact with the foil surface. These calendered foam portions are also preferably joined to the foil by ultrasonic welding, or by another appropriate welding technique. The ratio of the calendared foam thickness to the initial foam thickness is preferably not less than 0.5. Fig.6 shows the foam/foil assembly of Fig.1 after the calendaring step, wherein the dashed lines indicate the initial thickness of the foam 10.

It will be noted that if calendaring is applied, ultrasonic welding is the preferred technique for joining the calendared portions to the foil. Accordingly, an adapted tool can be used simultaneously perform the calendering and the ultrasonic welding, this tool being also adapted to the chosen production process (batchwise or continuous). Within the calendered foam, an efficient exchange of heat between the cooling medium and the metal foam is maintained via convection inside the still wide open-pore structure.

Turning now to Fig.2, a metal foam to metal foil assembly 50 is shown, wherein the joining is achieved by a plurality of spot welds 52. The metal foam 54 is laid flat on the metal foil 56 and joined thereto at the spot welds only, where the foam 52 is substantially compressed. Except at the welding locations 52, the foam 52 does not need to be subjected to any compression step, but calendering and welding can be applied for improved performances if desired..

The spot welds 52 are also preferably carried out by ultrasonic welding. Preferred materials for this assembly 50 are copper, silver plated copper or other metals having high heat conductivity.

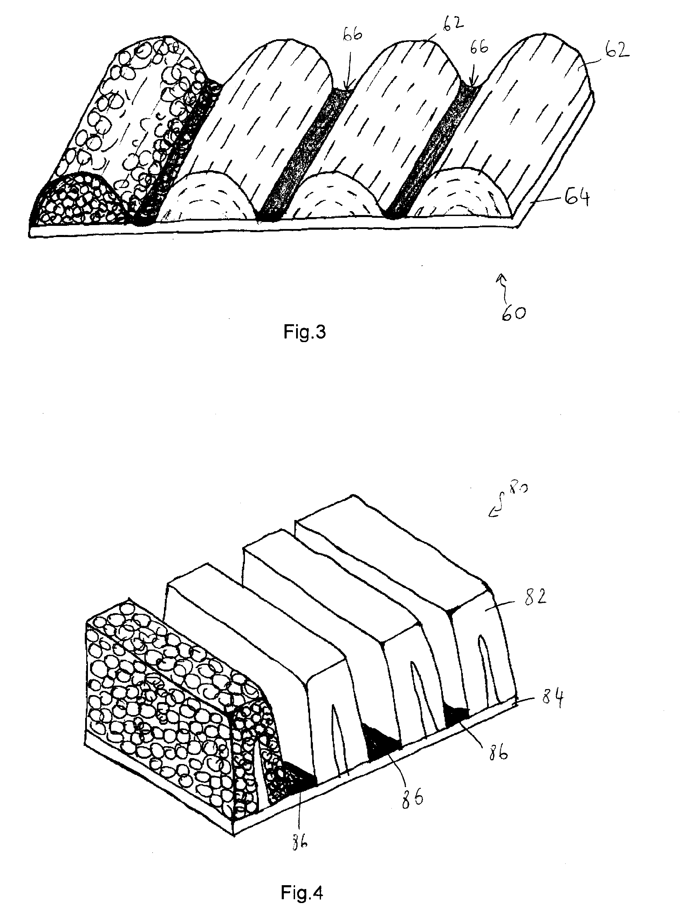

Fig.3 shows a third embodiment of a metal foam to foil assembly 60, wherein the foam 62 is joined to the metal foil 64 at a plurality of main joining locations 66. The metal foam 62 is substantially compressed at the joining locations 66, which take the form of regularly spaced longitudinal seams. The foam 62 between two consecutive seams 66 has a semicircular cross-section, thus forming halve-cylinders on the surface of the foil 64. This semicircular shape of the metal foam 62 can be preformed, or formed during compression by a welding tool having an appropriate shape.

In Fig.4, which shows a further type of assembly 80 of a metal foam 82 to a metal foil 84, the foam 82 has been shaped to form a porous fin structure on the foil surface 84. The foam 82 has been ultrasonically welded to the foil 84 in accordance with the present method, so that the metal foam 82 is joined to the foil by compressed foam portions at a plurality of main joining locations 86.

Turning now to Fig.5, a variety of assemblies are illustrated, where the metal foam is joined to the metal foil via one or more compressed foam portions.

Bracket 90 indicates a metal foam 92 that is joined to the foil 94 at a plurality of regularly spaced joining locations 96. At the joining locations the foam portion in contact with the foil surface is substantially compressed for improved heat exchange. In between two consecutive joining locations 96, the foam 92 is bent so as not to be in contact with the foil 94 and leave a void 98 between the foam 92 and foil 94. This example illustrates a case where the foam is locally contained and squeezed inside a vibrating clamp (i.e. the ultrasonic welding tool) which is introduced through the open spaces left between the body and the foam. In such an assembly, the width of the foam strip is advantageously matched with the length of the welding tool.

Bracket 100 indicates a similar kind of assembly, where the strip of foam is bent between two joining locations to leave a void between the foam and the foil.

Whereas in the preceding embodiments a strip of foam has been joined to the metal foam at a plurality of locations, bracket 110 indicates an assembly mode where a small strips of foam 112 are only joined to the foil 94 at one joining location 114.

As can be seen the strip of foam is joined to the foil by an edge portion which has been compressed 116. The strip of foam 112 extends perpendicularly to the surface of the foil 94.

Still in Fig.5, bracket 120 indicates strips of foam 122 extending essentially perpendicularly to the foil 94 and that are each bonded thereto via a compressed portion 124 at joining locations 126. Contrary to the embodiment of bracket 110, the foam 122 is not joined to the foil 94 via its edge, but the foam portion 96 has been compressed in its thickness direction, and the foam bent at 90° with regard to this compressed portion 96.

It remains to be noted that , if the interfacial contact area of the foam/foil assembly is low for design reasons, and if foam thickness is relatively high, one may use open-cell foam having a high specific foam weight so that its heat-carrying cross section (i.e. the amount of metal seen in cross-section) compensates at least partly for the longer path heat has to take. If the foam strip thickness is high, porosity will also be low in terms of pores per inch so as to facilitate the flow of the cooling medium through the entire foam section.

## Claims

1. A method for joining a metal foam to a metal body, wherein an open cell metal foam is joined to a surface of a metal body at at least one main joining location, **characterised in that** the metal foam portion contacting said metal body surface at said at least one main joining location is substantially compressed.

2. The method according to claim 1, **characterised in that** said metal foam portion at said main joining location is compressed to reach a compression ratio of at least 80%.

3. The method according to claim 1 or 2, **characterised in that** said metal foam is compressed at predetermined locations prior to joining, and that the metal foam is then joined to said metal body at said predetermined locations.

4. The method according to claim 1 or 2, **characterised in that** said metal foam is compressed during said joining step to provide said compressed metal foam portions at said main joining locations.

5. The method according to any one of the preceding claims, **characterised in that** said metal foam is joined to said metal body by ultrasonic welding at said at least one main joining location.

6. The method according to claim 5, **characterised in that** the metal foam is joined to the metal body by ultrasonic welding using an ultrasonic welding tool, and **in that** a metal foam portion is compressed at said at least one main joining location by applying a pressure towards said metal body surface by means of said ultrasonic welding tool.

7. The method according to claim 6, **characterised in that** said ultrasonic welding tool is also designed as a forming tool for said metal foam, to give a predetermined profile to said metal foam in the vicinity of said main joining location.

8. The method according to any one of the preceding claims, **characterised in that** said metal foam has a gradient of volume density.

9. The method according to any one of the preceding claims, **characterised by** a calendering step, wherein metal foam portions in between two consecutive main joining locations are compressed towards said metal body surface, the compression ratio being relatively lower than at said main joining locations.

10. The method according to claim 9, **characterised in that** said calendered foam portions are joined to said metal foil surface, either during said calendering step or thereafter.

11. The method according to any one of the preceding claims, **characterised in that** the metal body is a metal foil, preferably a copper foil.

12. The method according to any one of the preceding claims, **characterised in that** said metal body is a pipe or a heat sink.

13. The method according to claim any one of the preceding claims, **characterised in that** said metal foam is an open-cell copper or copper alloy foam.

14. The method according to claim 1, **characterised by** the step of giving a predetermined profile to the substantially uncompressed foam portion bridging two consecutive main joining locations.

15. The method according to any one of the preceding claims, **characterised in that** said metal foam is joined to said metal body by welding seams taking the form of spots, lines or circles.

16. An assembly of a metal foam to a metal body comprising:
a metal body having a surface;
an open-cell metal foam joined to said surface of said metal body at at least one main joining location;
**characterised in that** the metal foam portion contacting said metal body at said at least one main joining location is substantially compressed.

17. The assembly according to claim 16, **characterised in that** the compression ratio ofsaid compressed metal portion is of at least 80%.

18. The assembly according to claim 16 or 17, **characterised in that** said metal foam is in strip form and is joined to said surface of said metal body at a plurality of main joining locations according to a predetermined joining pattern.

19. The assembly according to claim 18, **characterised in that** said predetermined joining pattern includes a plurality of main joining locations forming regularly spaced linear seams.

20. The assembly according to any one of claims 16 to 19, **characterised in that** said strip of foam essentially follows said surface of said body.

21. The assembly according to any one of claims 16 to 19, **characterised in that** said metal foam mainly contacts the body surface at said main joining locations and **in that** said metal foam between two consecutive joining locations has a given profile.

22. The assembly according to claim 21, **characterised in that** between two consecutive main joining locations, said strip of foam is bent away from the body surface to form a series of fins of metal foam.

23. The method according to any one of claims 16 to 22, **characterised in that** said metal foam is in strip form and is joined to said body via a compressed edge portion so as to be perpendicular to said metal body surface.

24. The method according to any one of claims 16 to 20, **characterised in that** metal foam portions in-between two consecutive main joining locations are partially compressed in direction of said body surface.

25. The method according to claim 24, **characterised in that** said compressed metal foam portions in-between two consecutive main joining locations are joined to said metal surface.

26. The assembly according to any one of claims 16 to 25, **characterised in that** said metal foam has a gradient of volume density.

27. The assembly according to claim 26, **characterised in that** said gradient of volume density is in the thickness direction of said metal foam.

28. The assembly according to claim 26 or 27, **characterised in that** said volume density of said metal foam increases towards said metal body.

29. The assembly according to any one of claim 16 to 28, **characterised in that** said metal foam is joined to said metal body at said main joining locations by welding seams taking the form of spots, lines, curves or circles.

30. The assembly according to any one of claims 16 to 29, **characterised in that** the metal body is a metal foil, preferably a copper foil.

31. The method according to any one of the preceding claims, **characterised in that** said open-cell metal foam is a copper or copper alloy foam.

32. Use of an assembly according to any one of claims 16 to 31 as a heat exchanger.

33. Use of an assembly according to any one of claims 16 to 31 in an electromagnetic shielding structure, a sound absorbing structure or a solar heat collector.

34. Use of a method according to any one of claims 1 to 15 in a method for manufacturing a heat exchanger.
